Europäisches Patentamt

(19) European Patent Office

Office européen des brevets

(11) Publication number: 0 183 857
A2

(12) # EUROPEAN PATENT APPLICATION

(21) Application number: 84112457.1

(22) Date of filing: 16.10.84

(51) Int. Cl.⁴: G 02 B 6/42

(30) Priority: 04.11.83 IT 2358783

(43) Date of publication of application:
11.06.86 Bulletin 86/24

(84) Designated Contracting States:
AT BE CH DE FR GB LI NL SE

(71) Applicant: TELETTRA Telefonia Elettronica e Radio
S.p.A.
Corso Buenos Aires 77/A
Milano(IT)

(72) Inventor: Spodati, Fabrizio
Via Po No. 39
I-Ospitaletto di Cormano (Milano)(IT)

(72) Inventor: Tamburello, Mario
Via Brianza No. 2
I-Vimercate (Milano)(IT)

(74) Representative: Incollingo, Italo
c/o TELLETRA-Telefonia Elettronica e Radio Patent
Department Corso Buenos Aries 77/A
I-20100 Milano(IT)

(54) System and devices for the connection of photodetectors and optic fiber.

(57) The system for the alignment and assembly of optic fibers with photodetectors in hermetic package with glass window and without fiber tail consists of the following processes: terminate one end of the optic fiber with a semiconnector; prepare a support plate with two concentric seats, each one of them being obtained on one of the major faces; insert the photodetector device into one of these seats and the free semi-conductor end into the other seat and fix this device and semi-conductor end to the relevant plate seats, preferably using synthetic resins.

EP 0 183 857 A2

0183857

1.

SYSTEM AND DEVICES FOR THE CONNECTION OF PHOTODETECTORS AND
OPTIC FIBER

1. Field of the invention

The present invention relates to a system for the connection
between photodetector and optic fiber, in particular for the
alignment and assembly of optic fibers with photodetectors in
hermetic package with glass window and without fiber leader.

2. Statement of the prior art

It is well-known that the success of the transmission system
by optic fiber used in communications is connected to the
availability of solid state sources and detectors, that must
be efficient, reliable and cheap, such as the one assembled in
hermetic package without fiber leader, type APD (avalanche pho-
to-diode), that require fiber-photodetector assembly having an
high sturdiness and quality.

It is known that the package tightness is indispensable for
guaranteeing the protection from pollution produced by chip
contamination agents that, owing to high input voltages amounting to ab. 200 V necessary for getting the avalanche gain,
would reduce greatly the component life.

The connection efficiency between fiber and APD through the
glass window can be very high, as the APD construction technique allows to get good performances with a useful photosensitive area having a diameter comprised between 250 and
600 /um, to which corresponds a maximum distance of the fibre without connection losses comprised between 0.49 and 1.35
mm..

0183857

The classic solutions for the connection of the fiber with a detector supplied with glass window and without leader are numerous but not free from drawbacks.

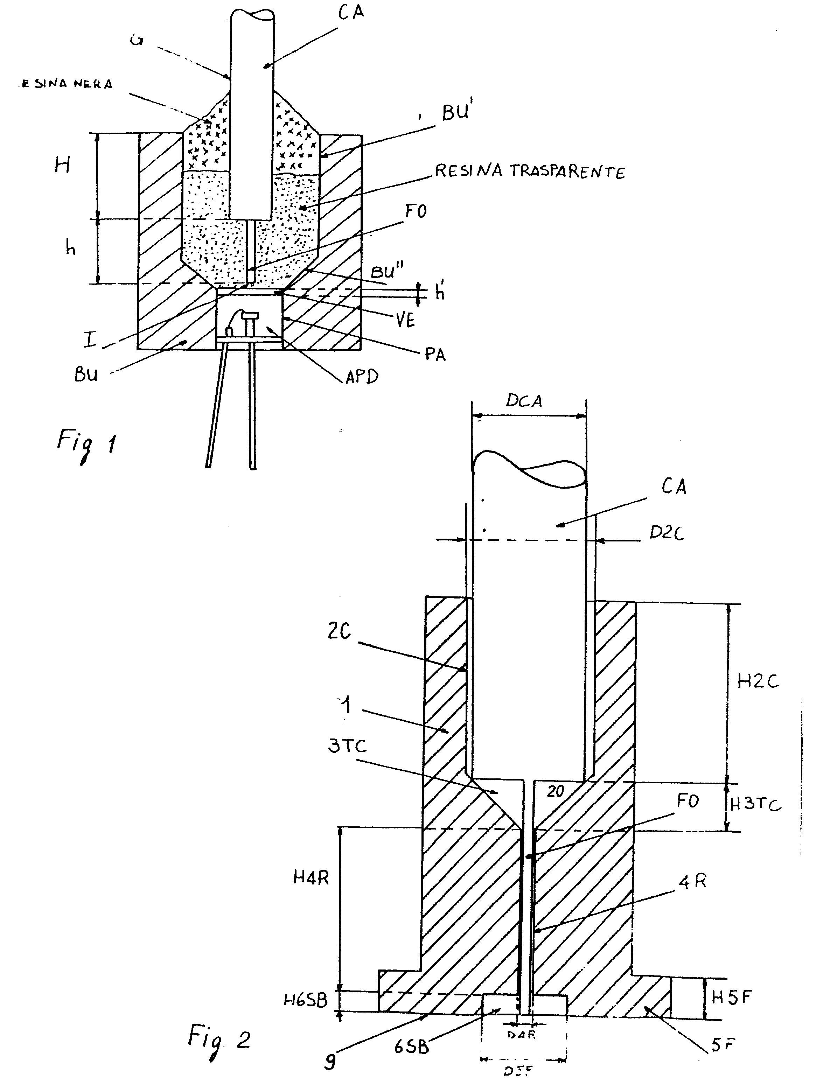

To briefly illustrate the ideas, one conventional more frequen tly used device (used by the applicant too) is shown in schematic section view in the fig. 1: it is made-up by a substantially cylindrical bush (BU); its lower side and hole (PA) hold the APD that ends superiorly with the plate of the glass window (VE). The monofiber cable (CA) with sheath (G) penetrates for a substantial depth (H) into the superior cylindrical part of the bush (BU) and continues into the inferior zone with a depth (h), without sheath with the sole uncovered fiber (FO).

Generally between the superior cylindrical part (BU') of the bush (BU) and the passage (PA) having an inferior diameter it is foreseen a truncated conical fitting (BU").

As the drawing shows, the fiber end (FO) is kept at a very little distance from the glass (VE); the cable (A) and its appendix (FO) are locked in the represented position filling all the inner bush volume (BU) with resin (preferably of black colour, in the high part and transparent in the lower one).

The line-up of the terminal fiber (FO) part with the lower APD was possibly made by means of micromovements of the fiber. Among the more important drawbacks of this assembly type, the following ones can be mentioned:

- the jacket (I) between the free lower fiber end (FO) and the lower surface of the glass (VE) holds a resin stratum that, in some conditions, damages and breaks the said glass

0183857

(VE);

- the jacket (I) height between (VE) and (FO) is notoriously
  critical as the maximum coupling · is got in correspondance
  to a well-fixed value.

The adjustment of (I) is not easy if we consider the device
in question: in fact, if the free fiber end is pushed too much
against (VE), the fiber is bended until its breackage; on the
contrary, if it is too much far from (VE), the coupling
losses increase.

The first object of the present invention is a system and relevant devices that do not show the above mentioned drawbacks
and allow an efficient, sure and quick coupling · between the
fiber and the photodetector.

The system according to the invention for the alignment and
the assembly of one optic fiber end with photodetector in
hermetic package form with glass window and without fiber
tail  is characterized in that: one fiber end is ended by
a semiconnector; it is prepared a support plate with two
cylindrical concentric seats obtained on one of the major
faces of this support; these concentric seats communicate
between themselves by a common hole; the hermetic device of
the photodetector is introduced into one of these seats
keeping the glass window in a more internal position and matched on the hole; the free end of the semiconnector is introduced into the other seat, truing also the hole of the peeled
fiber with the plate hole; and the said detector device and
free semiconnector end are fixed to the relevant seats by
synthetic catalyzed and possibly  filled resins.

DESCRIPTION OF THE PREFERRED EMBODIMENTS

These and other objects and advantages of the invention will appear better in the following description of the embodiment forms (preferred and not limitative) shown in the annexed drawings, in which:

- the figures 2,3,4 are schematic partially sectioned views of an optic fiber terminal and respectively of two assemblies of this terminal with two plates or bushes lightly different one from the other.

- the figures 3A and 4A are plan views of bushes or plates for the assemblies of the figures 3 and 4;

- the figures 3B and 4B are the traverse sections of the bushes shown in the figures 3A and 4A.

Making reference to the figures from 2 to 4B, the system phases according to the present invention can be fixed as follows:


A) Setup of the optic cable

According to a first object of the invention, the optic cable (CA) to be assembled to the APD is ended at the connection end with a semiconnector (1) (shown in enlarged scale in fig. 2) that is made-up by a body including (from the top to the bottom side) a cylindrical section (2C), having height (H2C) and inner diameter lightly higher than the external diameter (DCA) of the sheat; a truncated conical part or raiser (3TC) having height (H3TC) and diameter decreasing from (D2C) (substantially equal to the sheath one) to the diameter (D4R) lightly higher than the fiber one (FO) (without sheath); a part (4R)

0183857

having height (H4R) and inner diameter (D4R) lightly higher than the external one of the fiber (FO); a flanged lower part (5F) having height (H5F) and external diameter (D5F); and at last a recess (6SB) got in the lower face (9) of the body (1) of the sub-connector having height (H6SB) and diameter (D6SB).

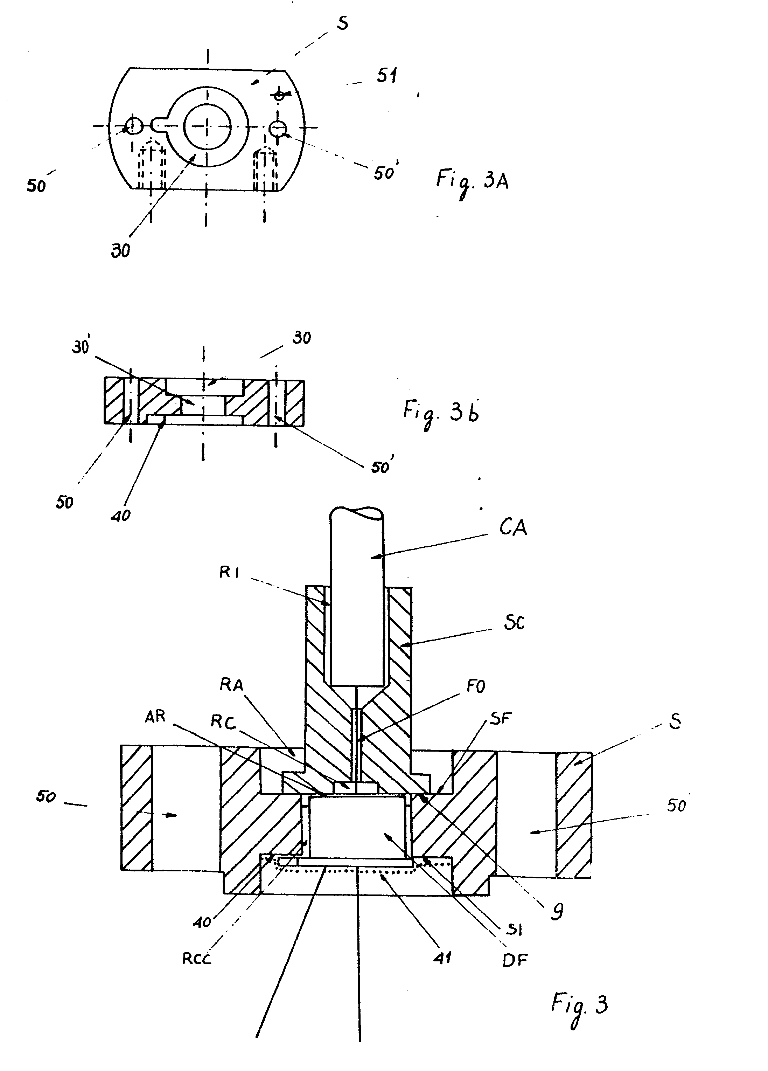

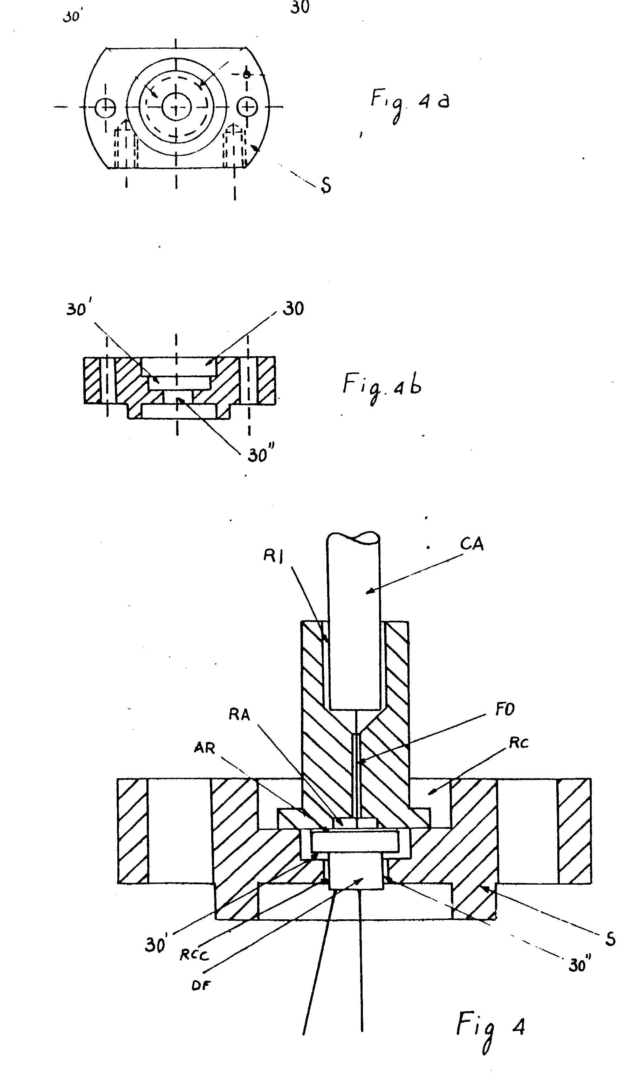

The connection between the cable (CA) and the bush is got as follows (see also the figures 3 and 4):

1) the cylindrical body (2C) (and partially the truncated cone
   section 3TC too) of the bush (1) is  preferably filled with
   epoxy resin (e.g. of the EPOTEX 302 type);

2) the peeled fiber end (FO) is introduced into the bush (1)
   until the plastic external sheath (CA) is in ledge on the
   larger base (20) of the truncated cone section (3TC); generally the free end of FO crosses the recess (6SB);

3) an epoxy resin, charged with alumina (e.g. 0.27-0.37 gr. of
   alumina for  1 gr. of resin), is prepared and a drop of it
   is introduced into the recess or slot (6SB) of the bush (1)
   around the fiber hole (FO) in the component side;

4) the resin is polymerized, e.g. at room temperature for ab.
   1 hour or at 60°C for ab. 15 minutes and so on;

5) when the polymerization is completed, it will be made the
   cylinder surface (9) lapping by a conventional technique.
   The figures 3 and 4 show the polymerized resin stratum
   applied  during the phase 1) that is indicated with (RI)
   and the  resin drop charged with (RC).


B) APD bushing

6) The first operation consists in cleaning carefully the glass (VE) of APD, e.g. by isopropyl alcohol; for avoiding the halos produced by alcohol vaporisation, the glass (VE) must be accurately dried;

7) then the metallic package of the device (APD) is cleaned and a resin stratum is applied around this one (conductive silver paste) shown with (RCC);

8) the so resin-sheathed photodetector device is introduced into the support (S) (figures 3, 3A, or 4, 4A), that is substantially a plate (S) having a seat or superior zone (SF) for holding the assembled semiconductor (SC) of fig. 2, and one inferior seat (SI) (40) for holding the photodetector device (DF).

Preferably the said seats (SF) and (SI) have both a shape of cylindrical and not very tall cavities.

Further the support (S) shows two symmetrical fastening holes (50) and (50') and at least a more little threaded hole (51).

The superior hole or seat (SF) (30) has a step shape (30') (figures 3, 3A and 3B) or quite two steps (30 and 30") (figures 4, 4A and 4B).

The step seat (30) is also accurately degreased before introducing the hermetic device (DF) into it.

The glass (VE) of this last one must be in correspondance with the plate (S) reference plane.

For making easier this operation, it can be used a ground punch, placed in ledge on the reference plane, sending the APD device in contact with the same tool (not shown).

All the above described parts are placed into an oven e.g.

0183857

at 60°C for ab. 18 hours.

When the polymerization is over, an epoxy resin is applied on the bottom (40) of the plate (S) for improving too the mechanical seal between APD (DF) and support (S).

A light resin stratum (41) (indicated with the points in figure 3) is formed. This operation also can be made in mass-production on the devices to be assembled.


C) Assembly between APD and fiber

The inferior face of the flanged semiconnector part (SC), and further the inferior face of the resin drop (RC) introduced into the recess (6SB) are inserted into the seat (30) of the support (S) plate, that, as the figures 3 and 4 show, is much more wide and tall than the flange (5F) of the semiconnector (SC).

For testing the optic output power of the fiber (FO) placed into the cylinder (1), it is used a proper adapter for the photodetector (not shown as it is well-known).

After having placed the APD bushed device into the proper seat (DI) of the support plate (S), the flanged cylinder part is placed into a clamp that is aligned for assuring the squareness between the axis of the said cylinder (1) and the plate reference plane.

The lapped cylinder (9) surface is sent in ledge with the plate reference plane and, with sole traverse movements with reference to the fiber axis, it is possible to optimize the alignment between the active part of the device (DF) and the fiber (FO).

The plate (S) and the cylinder (SC) are locked together by carbon-filled epoxy resin, batching e.g. 0.35 gr. of carbon for 1 gr. of resin (RA).

It is got the resin stratum (RA).

An advantage of this technique with respect to the former one consists in having a fiber introduced into a rigid body (SC), which is locked and sent into ledge on the bush plane (1): therefore it is eliminated the positioning in height of the fiber and this fact renders it more handy.

Further the cylinder (1) with the introduced fiber (FO) is lapped, avoiding in this way the cut of the peeled fiber, as the cut must be controlled each time and often requires remakings due to the delicacy of the non-protected fiber.

According to an advantageous feature of the invention, now an air stratum (AR) is applied between the fiber end (FO) in the recess (6SB) and the glass (VE) of the device instead of a resin stratum as it occurs into the jacket (I) of figure 1; this fact generates a Fresnel loss in optic connection (with respect to the former technique with resin applied between fiber and glass) of ab. 0.4 dB.

The air stratum (AR) is minimum, therefore it can be noticed with a great difficulty in the figures 3 and 4.

The components assembled with the conventional technique of fig. 1 and with the described system were tested for qualifying the process in environmental conditions that simulate the worse exercize conditions.

It was obtained that the components assembled with the conventional process can suffer breakdowns, due to tightness loss

0183857

produced by the mechanical stress generated by the resin on the window (VE) of ADP for the different thermal dilatation coefficients of used materials.

For locating all components subject to this breackdown type, it is necessary to submit all production to a burn-in that shows the component degradation.

This burn-in involves industrial costs, therefore it is surely advantageous and preferable to use the process according to the invention that does not show the above mentioned breackdown.

The sole little drawback of this last process is a loss amounting to ab. 0.4 dB, due to the reflection in the interface between glass and fiber, air and glass of the APD window.

The same process according to the invention is suitable for an industrial production as it requires assembly times without requiring further screening after the assembly.

The assembly has a good optic efficiency and perfect mechanichal performances, using a wired and well-protected fiber.

Further it is allowed the maximum flexibility in the selection of the connector and the photodiode type to be used.

The present invention was described with illustrative aims making reference to the preferred fulfilment forms, represented in the annexed drawings: it is obvious that they can be subject to variants, changes, replacements and similar ones that, being at disposal of the mean skilled technicial, undergo automatically in the field and spirit of the invention.

3.                                      0183857

CLAIMS

1) System for the alignment and the assembly of optic fibers
   on photodetectors, in particular for the high-preformance
   connection between the luminous emission glass face of the
   photodetector assembly without fiber leader and one optic
   fiber end superiorly protected by sheath, characterized in
   that:
   - it is realized a semiconnector at the free fiber end and
     the ends of the said semiconnector and the photodetector
     device are both introduced into a seat of the support
     base of the free fiber end, being they trued directly on
     the photodetector glass separated from this last one by a
     min. air stratum.

2) Sistem according to the claim 1, characterized in that the
   the semiconnector is obtained introducing a fiber section
   into a bush so that the peeled end goes into a lower bush
   recess and the sheathed end goes into ledge on the truncated cone part of the same one, filling completely the hollow part of the bush with epoxy and hardening resin, applying a resin drop in the said recess and making the polymerization of the resin strata.

3) System according to the claim 1, characterized in that the
   external cylindrical surface of the photodetector device
   is sheathed with a thin resin stratum; then the resin-sheathed
   detector is introduced into a plate seat, a free semiconnector end is introduced into the other seat of the plate,
   that, being larger and higher than the semiconnector end

0183857

flange, can be filled with resin, that is preferably polymerized together with the one with which the photodetector device is sheathed externally before inserting it into its seat.

4) System according to the claim 3, characterized in that a further light stratum of polymerizing resin is applied on the bottom of the device and externally to this last one after that it is pushed completely into its seat.

5) Sistem substantially according to what described and represented.

6) Connection between an optic fiber and an hermetic photodetector and without fiber leader, consisting mainly of the following parts:

- a semiconnector applied at the fiber end including a first cylindrical zone having diameter lightly higher than the fiber sheath one; a second truncated cone connection zone between the said first zone and a third cylindrical zone having diameter lightly higher than the one of the peeled fiber, and preferably a terminal flange with a central recess; a support plate with two seats, each obtained on one major face, a first seat used for at least the lower flanged part of the semiconnector and a second seat for the photodetector device, the said two seats having a cylindrical and coaxial shape and communicating between themselves by a hole; the means for fastening the said semiconnector to the fiber free end; the means for fastening the semiconnector (so bound to the fiber) into one plate seat; means for fastening the

**0183857**

photodetector device into the second seat of the plate;. and means for fastening the bottoms of the device and · the said plate.

7) Connection according to the claim 6, in which the said fastening means are resins polymerized in site.

8) Connection substantially according to what described and represented.

Fig 1

Fig 2

0183857

S

51

_ 50'

50

30

Fig. 3A

30'        30

50'

50
40

Fig. 3b

CA

RI

SC

RA        FO

AR   RC              SF              S

50                                    50

40            g

RCC      SI   DF
41

Fig. 3

Fig. 4a

Fig. 4b

Fig 4